Europäisches Patentamt

European Patent Office

Office européen des brevets

(11) Veröffentlichungsnummer: **0 255 630 B1**

# EUROPÄISCHE PATENTSCHRIFT

(45) Veröffentlichungstag der Patentschrift: **10.07.91**

(51) Int. Cl.⁵: **A01C 7/10**, G05D 7/06

(21) Anmeldenummer: **87110329.7**

(22) Anmeldetag: **17.07.87**

(54) **Landwirtschaftliche Verteilmaschine.**

(30) Priorität: **25.07.86 DE 3625114**

(43) Veröffentlichungstag der Anmeldung:
**10.02.88 Patentblatt 88/06**

(45) Bekanntmachung des Hinweises auf die
Patenterteilung:
**10.07.91 Patentblatt 91/28**

(84) Benannte Vertragsstaaten:
**AT DE FR GB**

(56) Entgegenhaltungen:
EP-A- 158 985        EP-A- 0 119 292
DE-A- 3 310 424      DE-A- 3 502 011
FR-A- 2 541 537      FR-A- 2 568 031

(73) Patentinhaber: **Amazonen-Werke H. Dreyer
GmbH & Co. KG
Am Amazonenwerk 9-13
W-4507 Hasbergen-Gaste(DE)**

(72) Erfinder: **Mix, Arthur
Gerhard-Hauptmannweg 15
W-2872 Hude i.O.(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft ein Verfahren zur Regelung der Ausbringmenge einer landwirtschaftlichen Verteilmaschine sowie eine landwirtschaftliche Verteilmaschine gemäß den Oberbegriffen der Patentansprüche 1 bzw. 2.

Ein derartigs Verfahren sowie eine entsprechende Verteilmaschine ist bereits durch die DE-A-33 10 424 bekannt. Bei dieser landwirtschaftlichen Verteilmaschine ist an den Dosierorganen bzw. dem Antrieb der Dosierorgane ein Sensor angeordnet, der die Drehzahl der Dosierorgane ermittelt und die der Drehzahl entsprechenden Signale einem Auswertecomputer zuleitet. Bei dieser bekannten Verteilmaschine ist es zwingend erforderlich, einen Abdrehvorgang durchzuführen und während dieses Abdrehvorganges die Umdrehungen der Dosierorgane zu zählen und dann diese beiden Werte miteinander ins Verhältnis zu setzen. Nachteilig ist bei dieser Regelung, daß Unterschiede des auszubringenden Materials einer Vorratsbehälterfüllen bzw. sich änderndes Material während des Ausbringvorganges unberücksichtigt bleiben bzw. immer wieder Abdrehproben durchgeführt werden müssen, um festzustellen, ob das festgelegte Verhältnis zwischen Ausbringmenge bzw. Anzahl der ausgebrachten Körner zu der entsprechenden Umdrehungszahl der Dosierorgane noch stimmt.

Der Erfindung liegt die Aufgabe zugrunde, eine schnell arbeitende und von der tatsächlichen Ausbringmenge abhängige Regelung zu schaffen, so daß die gewünschte Ausbringmenge/Anzahl der Körner pro Flächeneinheit ausgebracht wird.

Diese Aufgabe wird erfindungsgemäß durch das Kennzeichen der Ansprüche 1 bzw. 2 gelöst. Infolge dieser Maßnahme wird über den den Dosierorganen zugeordneten Sensor während des Ausbringvorganges ständig überwacht, ob aufgrund der eingestellten Drehzahl der Dosierorgane auch die tatsächlich gewünschte Ausbringmenge ausgebracht wird. Es entfällt also die ständige manuelle Überwachung durch eine Abdrehprobe, ob die eingestellte Drehzahl tatsächlich der gewünschten Ausbringemenge entspricht. Es wird also ständig aufgrund der Überwachung der Ausbringmenge bzw. Anzahl der ausgebrachten Körner das eingestellte Verhältnis der Drehzahl der Ausbringmenge überwacht und bei einem Abweichen des Istwertes vom Sollwert dieses Verhältnis entsprechend nachgeregelt.

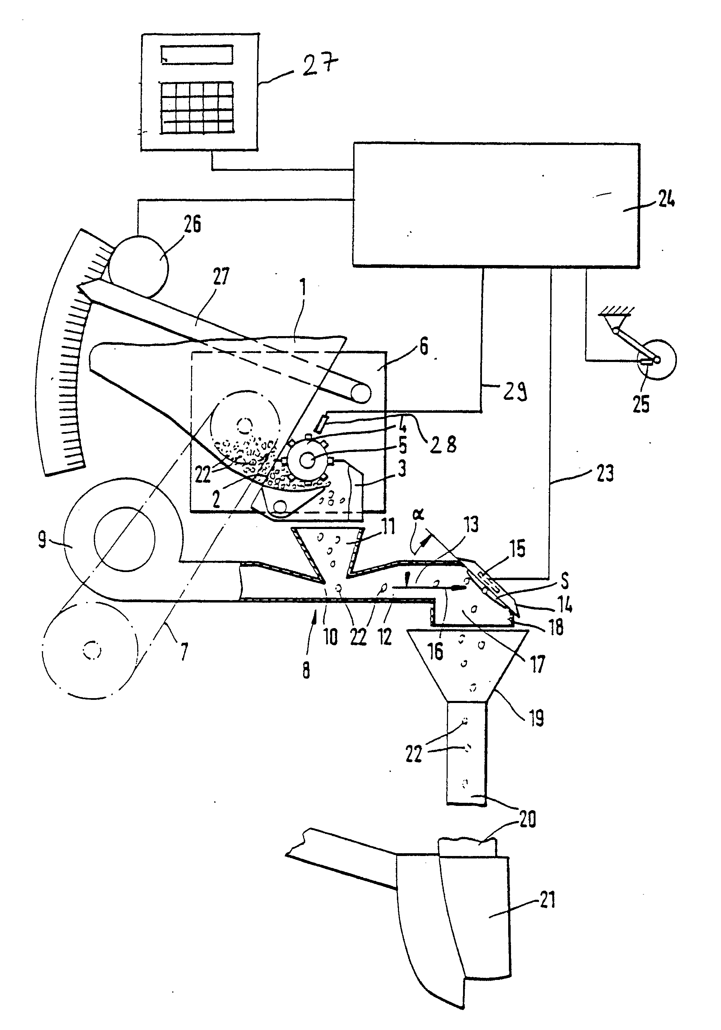

Die Erfindung wird an einem Ausführungsbeispiel erläutert. Die Zeichnung zeigt den Aufbau der erfindungsgemäßen Verteilmaschine mit der erfindungsgemäßen Schaltung zur Durchführung des Regelungsverfahrens.

Der Vorratsbehälter 1 der als Drillmaschine ausgebildeten Verteilmaschine weist in seinem unteren Bereich die Auslauföffnungen 2 auf, vor denen die Dosiergehäuse 3 mit den darin sich befindlichen Dosierorganen 4, die als Nockenräder ausgebildet sind, befinden. Die Nockenräder 4 sind auf der Dosierwelle 5 drehfest angeordnet und werden über das stufenlos einstellbare Regelgetriebe 6 und den Kettentrieb 7 von einer Kraftquelle angetrieben. Unterhalb des Dosiergehäuses 3 ist die Beschleunigungsvorrichtung 8 angeordnet. Die Beschleunigungsvorrichtung 8 besteht aus dem von einer Kraftquelle angetriebenen Gebläse 9, der Injektorschleuse 10 mit dem Einlauftrichter 11 und der als Rohr 12 ausgebildeten Beschleunigungsstrecke 13. An dem Ende der Beschleunigungsstrecke 13 ist die Sensorplatte 14 mit dem Sensor 15 unter dem Winkel $\alpha$ zur Beschleunigungsrichtung 16 der Beschleunigungsstrecke 13 angebracht. Der Winkel $\alpha$ weist etwa eine Größe von 45° auf. Unterhalb der Sensorplatte 14 befindet sich die Öffnung 17 mit dem Auslauf 18, an den sich der Trichter 19 des Saatrohres 20, welches zu dem Säschar 21 führt, anschließt. Da alle Dosierorgane 4 gleich ausgebildet sind und von der gleichen Dosierwelle 5 angetrieben werden, ist es ausreichend, wenn nur unterhalb eines Dosierorganes 4 die Beschleunigungsvorrichtung 8 mit dem Sensor 15 angeordnet ist. Seitlich der Sensorplatte 14 befindet sich der Luftauslaßschlitz S, damit die von dem Gebläse 9 geförderte Luft entweichen kann.

Die sich in dem Vorratsbehälter 1 befindlichen Saatkörner 22 werden in einstellbaren Mengen bzw. Anzahl pro zurückgelegter Wegstrecke der Sämaschine von den jeweiligen Dosierorganen 4 den Säscharen 21 zugeführt und somit in dem Boden abgelegt. Das Dosierorgan 4, unter welchem die Beschleunigungsvorrichtung 8 angeordnet ist, führt die dosierten Saatkörner 22 über den Einlauftrichter 11 der Injektorschleuse 10 zu. In der Injektorschleuse 10 werden die Saatkörner 22 von dem von dem Gebläse 9 erzeugten Luftstrom erfaßt und in Richtung des Sensors 15 in dem Bereich der Beschleunigungsstrecke 13 relativ stark beschleunigt. Die beschleunigten Saatkörner 2 treffen dann mit einer relativ großen Bewegungsenergie auf die Sensorplatte 14 auf. Durch das Auftreffen der Saatkörner 22 auf die Sensorplatte 14 werden Impulse, Signale oder Schwingungen erzeugt, die von dem Sensor 15 aufgenommen werden. Nach dem Auftreffen der Saatkörner 22 auf die Sensorplatte 14 werden die Saatkörner 22 aufgrund des Anstellwinkels $\alpha$ der Sensorplatte 14 zu der Beschleunigungsrichtung 16 der Saatkörner 22 nach unten in Richtung des Trichters 19 des Saatrohres 20 abgelenkt. Von hieraus fallen dann die Saatkörner 22 im freien Fall über das Säschar 21 in die vom Säschar erzeugte Furche.

Die von dem Senor 15 aufgefangenen Impulse, Signale oder Schwingungen werden über die Leitung 23 einem Mikroprozessor 24 zugeleitet. Weiterhin ist an dem Mikroprozessor 24 die Wegstreckenmeßeinrichtung 25 angeschlossen. Die Wegstreckenmeßeinrichtung ermittelt den von der Sämaschine zurückgelegten Weg. Diese ermittelten Wegstreckenwerte werden ebenfalls dem Mikroprozessor zugeleitet. Aus diesen Werten errechnet der Mikroprozessor 24 dann die tatsächlich ausgebrachte Anzahl von Saatkörnern, die das Dosierorgan 4 dem Säschar 21 zuleitet. Diese ermittelte Anzahl tatsächlich ausgebrachter Saatkörner wird dann in den Mikroprozessor 24 mit den in dem Mikroprozessor 24 eingegebenen Sollwert verglichen. Wenn der ermittelte Istwert von dem Sollwert abweicht, gibt der Mikroprozessor entsprechende Signale an den Stellmotor 26, der dann entsprechend den Stellhebel 27 des Regelgetriebes 6 verstellt, damit das Dosierorgan 4 die dem Sollwert entsprechende Anzahl Saatkörner pro zurückgelegter Wegstrecke dosiert. Dieser Regelvorgang wird kontinuierlich wiederholt. Der Sollwert wird über das ein Bedienungsfeld und ein Anzeigefeld aufweisende Bedienungselement 27 in den Mikroprozessor 24 eingegeben.

In den als Mikroprozessor 24 ausgebildeten Auswertecomputer werden über das eine Tastatur und ein Anzeigefeld aufweisende Bedienungselement 27 die jeweiligen Werte eingegeben.

An der Drillmaschine ist im Bereich der Dosierorgane 4 der Drehzahlaufnehmer 28 angeordnet, der über die Leitung 29 mit dem Auswertecomputer 24 verbunden ist.

Die von dem Drehzahlaufnehmer 28 übermittelten Werte werden an den Auswertecomputer übermittelt und aus diesen übermittelten Werten wird die tatsächliche Drehzahl der Dosierorgane 1 errechnet. Wenn die Fahrgeschwindigkeit sich ändert, welches über die Wegstreckenmeßeinrichtung 25 festgestellt wird, wird entsprechend von dem Auswertecomputer 24 der Stellmotor 26 gesteuert und entsprechend die Einstellung des Regelgetriebes 6 verändert, so daß in bezug auf den zurückgelegten Weg in Abhängigkeit der tatsächlichen Fahrgeschwindigkeit die gewünschte Menge ausgebracht wird. Des weiteren weist der Auswertecomputer 24 eine derartige Schaltung auf, daß die Drehzahl der Dosierorgane 4 über einen Zeitabschnitt bzw. Wegstreckenabschnitt und die Ausbringmenge/Anzahl der Körner über den gleichen Zeitabschnitt bzw. Wegstreckenabschnitt von dem Auswertecomputer 24 ins Verhältnis gesetzt werden. Des weiteren weist der Auswertecomputer 24 eine derarige Schaltung auf, daß die Einstellung der die Dosierorgane regelnden Regelorgane 6 aufgrund der von dem Drezahlaufnehmer 28 gelieferten Signale in Abhängigkeit von der von der Wegstreckenmeßeinrichtung ermittelten tatsächlichen Fahrgeschwindigkeit der Verteilmaschine erfolgt.

In dem Auswertecomputer 24 wird das Verhältnis der Drehzahl der Dosierorgane 4 mit den vom Sensor 15 ermittelten Ausbringmengenwert pro Umdrehung der Dosierorgane 4 ermittelt und mit der entsprechenden Sollwertvorgabe verglichen. Weicht der Istwert von dem Sollwert aufgrund der Zusammensetzung bzw. den Eigenschaften des auszubringenden Materials ab, so wird von dem Auswertecomputer 24 dieses Verhältnis entsprechend geändert, so daß dann in Abhängigkeit der Fahrgassengeschwindigkeit über die Drehzahl der Dosierorgane 4 die Einstellung der Dosierorgane 4 entsprechend geregelt werden kann.

## Ansprüche

1. Verfahren zur Regelung der Ausbringmenge einer landwirtschaftlichen Verteilmachine, insbesondere einer Sämaschine oder eines Düngerstreuers, bei dem die Drehzahl eines die Ausbringmenge beeinflussenden Dosierorgans (4) als Drehzahlsignal erfaßt und abhängig von der tatsächlichen Fahrgeschwindigkeit der Verteilmaschine geregelt wird, dadurch **gekennzeichnet,** daß die von dem Dosierorgan abgegebene Ausbringmenge kontinuierlich während des Verteilvorgangs direkt gemessen und ein entsprechendes Ausbringmengensignal kontinuierlich an einen Auswertecomputer (24) gegeben wird, daß dann im Auswertecomputer (24) dieses Ausbringmengensignal über einen bestimmten Zeitabschnitt zu dem in diesem Zeitabschnitt erfaßten Drehzahlsignal des Dosierganes ins Verhältnis gesetzt wird und ein Istwert der tatsächlichen Ausbringmenge pro Umdrehung des Dosierorgans errechnet wird und daß dieser Istwert mit einer entsprechenden Sollwertvorgabe verglichen wird und bei Abweichungen des Istwertes von der Sollwertvorgabe die Drehzahl des Dosierorgans entsprechend nachgeregelt wird.

2. Landwirtschaftliche Verteilmaschine zur Durchdführung des Verfahrens nach Anspruch 1, insbesondere Sämaschine und Düngerstreuer, mit einem Vorratsbehälter (1), mit einem über eine Welle (5) antreibbaren Dosierorgan (4) zum Ausbringen von Saatgut oder Dünger in einstellbaren Mengen, mit einer Wegstreckenmeßeinrichtung (25) zur Erfassung der Fahrgeschwindigkeit der Verteilmaschine, mit einem Regelorgan (6) zum Regeln des Dosierorgans (4), mit einem Drehzahlaufnehmer (28) zum Erfassen der Drehzahl des Dosierorgans (4) und mit einem Auswertecomputer (24) mit einem Eingang für die vom Drehzahlaufnehmer (28) erfaßten Signale,

dadurch **gekennzeichnet,**

daß ein Sensor (15) zur Erfassung der vom Dosierorgan (4) tatsächlich abgegebenen Ausbringmenge dem Dosierorgan (4) zugeordnet ist, daß dieser Sensor (4) an einen Eingang des Auswertecomputers (24) über eine Leitung (23) angeschlossen ist, und daß der Auswertecomputer eine Schaltung aufweist, mit der die Drehzahl des Dosierorgans (4) über einen Zeitabschnitt zur am Sensor (15) erfaßten Ausbringmenge über den gleichen Zeitabschnitt ins Verhältnis setzbar ist.

## Claims

1. A method of regulating the flow rate of an agricultural distributor, particularly of a seed drill or of a fertiliser distributor, in which the rpm of a metering unit (4) influencing the flow rate is detected as an rpm signal and is regulated in dependence on the actual speed of travel of the distributor, characterised in that the flow rate delivered by the metering unit is continuously directly measured during the distribution procedure and a corresponding flow rate signal is continuously passed to an evaluation computer (24), that this flow rate signal over a determined period of time is placed in the evaluation computer (24) in ratio to the rpm signal in this period of time from the metering unit, and an actual value for the actual flow rate per revolution of the metering unit is calculated, and that this actual value is compared with a preselected required value and, upon deviation of the actual value from the preselected required value, the rpm of the metering unit is correspondingly readjusted.

2. An agricultural distributor for carrying out the method according to Claim 1, particularly a seed drill or fertiliser distributor, with a hopper (1), with a shaft (5)-driven metering unit (4) for distributing seed or fertiliser in adjustable amounts, with a land measure (25) for detecting the speed of travel of the distributor, with a regulating unit (6) for regulating the metering unit (4), with an rpm sensor (28) for detecting the rpm of the metering unit (4) and with an evaluation computer (24) with an input port for the signals detected by the rpm sensor (28), characterised in that a sensor (15) for detecting the actual flow rate delivered by the metering unit (4) is associated with said metering unit, that this sensor (15) is connected to an input of the evaluation computer (24) by a conductor (23), and that the evaluation computer has a circuit by means of which the rpm of the metering unit (4) over a period of time can be placed in ratio to the flow rate detected at the sensor (15) over the same period of time.

## Revendications

1. Procédé de réglage de la quantité distribuée par un distributeur agricole notamment un semoir ou un épandeur d'engrais, procédé selon lequel on détecte la vitesse de rotation d'un organe de dosage (4) qui influence la quantité à distribuer, comme signal de rotation et on règle en fonction de la vitesse de déplacement réelle du distributeur, procédé caractérisé en ce qu'on mesure directement la quantité fournie par l'organe de dosage pendant l'opération de distribution et on transmet un ordinateur d'exploitation (24), en continu, le signal correspondant à la quantité distribuée et cet ordinateur (24) calcule le rapport entre ce signal de la quantité distribuée dans un intervalle de temps déterminé et le signal de vitesse de rotation capté dans cet intervalle de temps pour l'organe de dosage, et calcule une valeur réelle de la quantité réellement distribuée par rotation de l'organe de dosage et cette grandeur réelle est comparée à une grandeur de consigne, prédéterminée et en cas de déviation entre la valeur réelle et la valeur de consigne prédéterminée, on règle de manière correspondante la vitesse de rotation de l'organe de dosage.

2. Distributeur agricole pour la mise en oeuvre du procédé selon la revendication 1, notamment semoir ou épandeur d'engrais comportant un réservoir d'alimentation (1) avec un organe de dosage (4) entraîné par l'intermédiaire d'un axe (5) pour distribuer des semences ou des engrais selon des quantités réglées, avec un dispositif de mesure de chemin parcouru (25) pour détecter la vitesse de déplacement du distributeur, un organe de réglage (6) pour régler l'organe de dosage (4), un compte-tours (28) pour détecter la vitesse de rotation de l'organe de dosage (4) un ordinateur d'exploitation (24) recevant en entrée les signaux détectés par le compteurs (28), dispositif caractérisé par un capteur (15) pour détecter la quantité réellement distribuée par l'organe de dosage (4), ce capteur étant associé à l'organe de dosage (4) et ce capteur (15) étant relié à une entrée de l'ordinateur d'exploitation (24) par une ligne (23) et l'ordinateur d'exploitation comporte un circuit qui établit le rapport entre la vitesse de rotation de l'organe de dosage (4) dans un intervalle de temps et la quantité distribuée dans ce même intervalle de temps, quantité détectée par le capteur (15).